Europäisches Patentamt

(19) European Patent Office     (11) Numéro de publication: **0 112 951**

Office européen des brevets     **B1**

(12) **FASCICULE DE BREVET EUROPEEN**

(45) Date de publication du fascicule du brevet: **03.06.87**     (51) Int. Cl.⁴: **H 04 L 25/48, H 04 L 25/45**

(21) Numéro de dépôt: **82430045.3**

(22) Date de dépôt: **28.12.82**

(54) **Procédé et dispositif de transmission de bits d'information entre microplaquettes.**

(43) Date de publication de la demande:
**11.07.84 Bulletin 84/28**

(45) Mention de la délivrance du brevet:
**03.06.87 Bulletin 87/23**

(84) Etats contractants désignés:
**DE FR GB**

(56) Documents cités:
**US-A-3 548 405
US-A-3 691 304
US-A-4 161 650**

**EDN, vol. 24, no. 2, janvier 1979, pages 92-93, Boston, USA, T. BALPH: "Drive 50omega transmission lines with TTL or ECL gate outputs"**

(73) Titulaire: **International Business Machines Corporation
Old Orchard Road
Armonk, N.Y. 10504 (US)**
㉞ **DE GB**

(73) Titulaire: **Compagnie IBM FRANCE
5 Place Vendôme
F-75000 Paris 1er (FR)**
㉞ **FR**

(72) Inventeur: **Boudon, Gérard
5, rue des Coudriers
F-91540 Mennecy (FR)**
Inventeur: **Mollier, Pierre
15, rue de Ponthierry
F-77310 Boissise-le-Roi (FR)**
Inventeur: **Lebesnerais, Gérard
9 rue des prés Saint Germain sur Ecole
F-77930 Perthes (FR)**

(74) Mandataire: **Lattard, Nicole
Compagnie IBM France Département de Propriété Intellectuelle
F-06610 La Gaude (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

Domaine technique

La présente invention concerne un procédé et un dispositif pour transmettre à grande vitesse des informations binaires entre les microplaquettes semi-conductrices dans lesquelles sont intégrés les circuits composant un système de traitement de l'information.

Actuellement, un problème qui se pose lors de la réalisation de systèmes de traitement de l'information dans lesquels des circuits sont intégrés sur des microplaquettes est celui de la transmission des bits d'information entre microplaquettes montées sur des modules différents. En effet pour tirer tous les avantages qui découlent de l'augmentation de la densité des circuits intégrés sur les microplaquettes il faut réduire au minimum l'encombrement qui résulte des bornes d'entrée/sortie aux modules sur lesquels sont montées les microplaquettes. Dans un tel environnement, le nombre des bornes d'entrée/sortie B augmente avec le nombre des circuits C suivant la relation $B \approx C^{2/3}$. Il s'ensuit que le nombre des circuits d'attaque nécessaires pour transmettre les informations binaires entre microplaquettes augment dans les mêmes proportions. Comme ces circuits d'attaque sont des éléments générateurs de bruit électrique sur les tensions d'alimentation, l'augmentation de leur nombre n'est pas souhaitable.

De plus, le nombre de broches d'entrée/sortie sur les modules est limité. En conséquence, l'augmentation des bornes d'entrée/sortie des circuits de la microplaquette conduit à une conception du module compliquée et donc entraîne une augmentation du coût de fabrication.

L'amélioration de la performance d'un système de traitement de données dépend à l'heure actuelle, autant de l'amélioration des transmissions entre microplaquettes que de l'amélioration des circuits sur les microplaquettes. En effet, le temps de traitement intrinsèque d'un circuit n'est qu'un tiers environ du temps de traitement moyen par circuit au niveau du système.

Généralement dans les systèmes de traitement de l'information, les circuits d'une microplaquette traitent des groupes de bits: octets ou mots et les groupes de bits obtenus après traitement sont transmis en parallèle à une autro microplaquette, pour y subir d'autres traitements.

Dans le cas où les microplaquettes sont situées sur des modules différents, cette transmission parallèle nécessite un nombre élevé de broches d'entrée/sortie du module.

De plus cette transmission parallèle pose un problème de bruit électrique lié à la commutation simultané à l'état conducteur des transistors des circuits d'attaque de sortie de la microplaquette.

Une solution à ces problèmes consiste à multiplexer les bits d'information à transmettre d'une microplaquette située sur un module à une autre microplaquette située sur un autre module, afin de limiter le nombre de bornes d'entrée/sortie.

Il est bien entendu que la transmission série, si elle présente l'avantage d'économiser des bornes d'entrée/sortie présente des inconvénients.

En effet, on peut effectuer une transmission série avec un codage type NRZ ou NRZ1 avec récupération du signal d'horloge du côté réception. Ce type de transmission est complexe car il n'implique pas que des circuits logiques, la récupération de l'horloge nécessite en effet, des oscillateurs type VCO contrôlés par une tension obtenue à partir de détecteurs de phase. Ce sont des circuits difficiles à réaliser et à tester dans un environnement de circuits intégrés logiques.

Pour palleir cet inconvénient on peut effectuer une transmission avec un codage type à double fréquence qui permet, du côté réception, de retrouver l'horloge directement à partir du signal reçu. Ce type de transmission nécessite une largeur de bande passante plus grande que le type de transmission utilisant un codage NRZ ou NRZ1 et en conséquence, à bande passante égale, la vitesse de transmission des bits de données est plus faible.

Un objet de la présente invention est donc un procédé et un dispositif pour transmettre des signaux binaires à vitesse élevée entre une microplaquette émettrice et une microplaquette réceptrice en utilisant un minimum de bornes d'entrée/sortie.

Un autre objet de la présente invention est de réaliser un dispositif de ce type qui utilise des circuits simples.

Résumé de l'Invention

La présente invention concerne un procédé de transmission de bits d'information engendrés par des premiers circuits sur une première microplaquette à des seconds circuits sur une second microplaquette dans lequel les bits de données parallèles à transmettre sont multiplexés et sont transformés en un train de bits série (D), un bit par période d'horloge. Le procédé comprend:

. la génération d'un signal d'horloge en dents de scie CK' ayant une amplitude supérieure à l'amplitude des bits et une période égale à deux périodes d'horloge,

. la génération à partir du train de bits D et de son complément $\overline{D}$, d'un premier et d'un second PH1 et PH2, le signal PH1 étant à un premier niveau, par exemple haut, lorsque le niveau du train de bit D est supérieur au niveau du signal d'horloge CK' et étant à un second niveau par exemple bas lorsque le niveau du train de bits D est inférieur au niveau du signal d'horloge CK' et le second signal PH2 étant au premier niveau (haut) lorsque le niveau du complément $\overline{D}$ du train de bits est supérieur au signal d'horloge CK' et étant au second niveau lorsque le niveau du complément $\overline{D}$ du train de bits est inférieur au niveau du signal d'horloge CK',

. la transmission des signaux PH1 et PH2 à la microplaquette réceptrice,

. la génération dans ladite seconde microplaquette à partir des signaux PH1 et PH2 de deux signaux $\overline{DJ}$ et $\overline{DK}$ représentatifs de l'état des bits et d'un signal d'horloge reconstitué CLK définissant chaque période de bit. Le premier signal $\overline{DJ}$ est à un premier niveau (haut) lorsque les niveaux de PH1 et PH2 sont égaux ou que le niveau de PH1 est inférieur au niveau de PH2 et est à un second niveau (bas) lorsque le niveau de PH1 est supérieur au niveau de PH2. Le second signal $\overline{DK}$ est à un premier niveau (haut) lorsque les niveaux de PH1 et PH2 sont égaux ou que le niveau de PH1 est supérieur au niveau de PH2 et est à un second niveau (bas) lorsque le niveau de PH1 est inférieur au niveau de PH2.

Le signal d'horloge reconstitué CLK est au premier niveau (haut) lorsque les niveaux de PH1 et PH2 sont différents et au second niveau (bas) dans le cas contraire.

Sur la première microplaquette un signal de trame F est utilisé pour grouper les bits du train de bits en multiplets et ce signal est transmis à la seconde microplaquette dans laquelle il est utilisé avec le signal d'horloge reconstitué CLK pour convertir et transformer les signaux $\overline{DJ}$ et $\overline{DK}$ en multiplets de bits parallèles.

La présente invention concerne aussi un dispositif pour mettre en oeuvre ce procédé.

Brève description des figures

La figure 1 représente le bloc diagramme d'un dispositif de transmission conforme à l'invention.

La figure 2 représente le diagramme des temps des différents signaux engendrés conformément au procédé de l'invention.

La figure 3 représente le schéma détaillé du dispositif de l'invention.

Les figures 4 et 5 représentent les circuits de multiplexage et de conversion et démultiplexage 4 et 17 des figures 1 et 3.

Description détaillée de l'invention

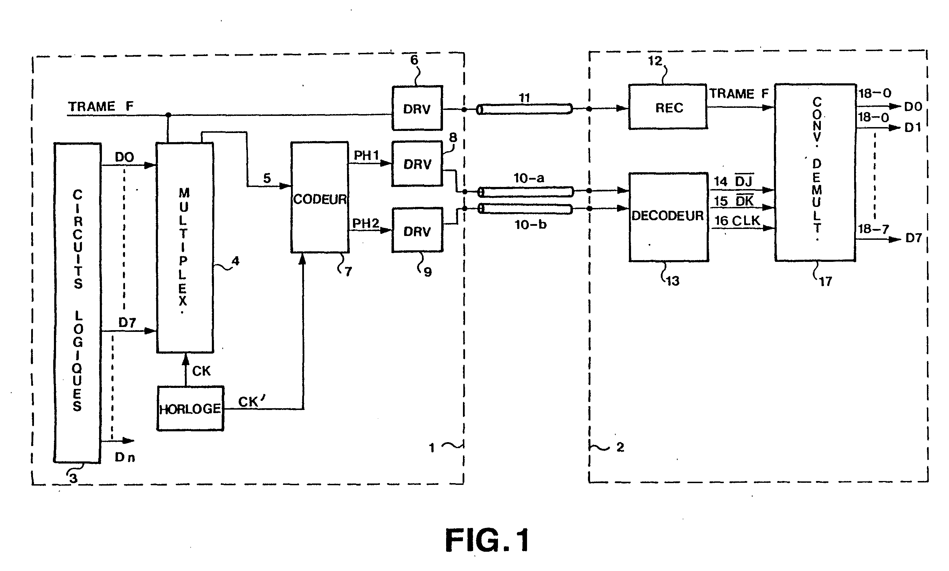

Le bloc diagramme des circuits nécessaires pour mettre en oeuvre le procédé de la présente invention est représenté sur la figure 1.

Les bits de données sont à transmettre d'une microplaquette 1 dite émettrice, disposée sur un premier module à une microplaquette 2 dite réceptrice disposée sur un second module.

La microplaquette 1 comporte des circuits schèmatisés par le bloc 3, qui effectuent des opérations sur des bits de données et qui engendrent des bits D0 à Dn à transmettre à la microplaquette 2, cette microplaquette 2 comporte des circuits qui effectuent des opérations sur les bits réçus.

Les bits D0 à Dn à transmettre depuis la microplaquette 1 sont généralement groupés en multiplets et sur la figure 1 on n'a représenté que les éléments nécessaires pour la transmission d'un octet de bits D0 à D7. Il est bien entendu que le principe de la présente invention peut être appliqué à des groupes comprenant un nombre différent de bits.

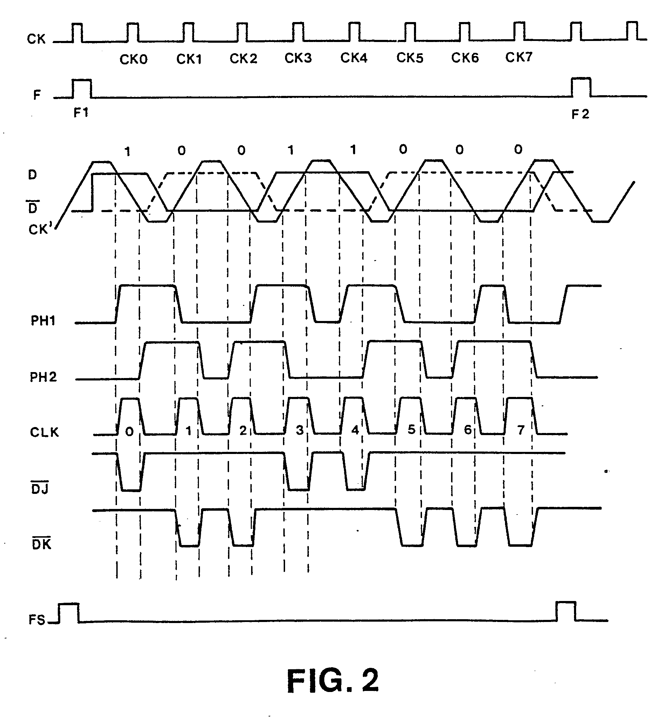

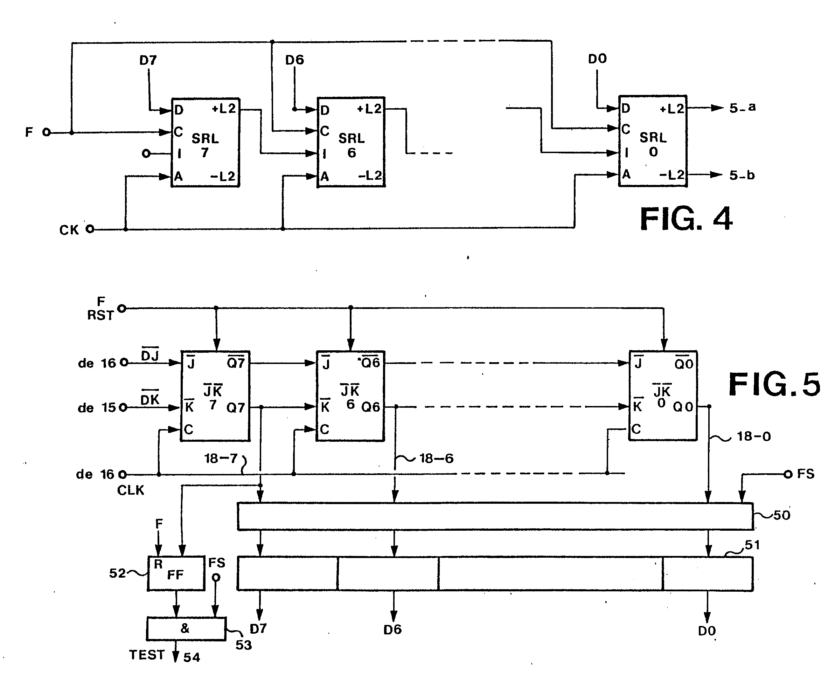

Les bits D0 à D7 sont appliqués à un circuit de multiplexage 4 qui sous contrôle d'un signal d'horloge CK et d'un signal de trame F représentés sur la figure 2, transmet les bits en série sur la sortie 5. Il existe de nombreux circuits pouvant réaliser cette fonction, un exemple d'un tel circuit sera décrit en référence à la figure 4.

Le signal de trame F est transmis par un circuit d'attaque 6 à la microplaquette réceptrice.

Conformément à l'invention un circuit de codage 7 engendre sous contrôle d'un signal CK' en dents de scie synchronisé avec le signal d'horloge CK, et ayant une excursion d'amplitude supérieure à celle des bits de données, deux trains d'impulsions PH1 et PH2, d'une façon qui sera décrite ultérieurement en référence à la figure 2.

Les deux trains d'impulsions PH1 et PH2 sont transmis par les circuits d'attaque 8 et 9 et les deux lignes couplées 10-a et 10-b à la microplaquette réceptrice 2. Sur cette microplaquette, un récepteur 12 reçoit aussi par la ligne 11, le signal de trame F pour permettre de séparer entre eux les octets qui se succèdent dans la transmission.

Les trains d'impulsions PH1 et PH2 sont reçus par un décodeur 13 qui engendre sur ses sorties 14 et 15 deux signaux $\overline{DJ}$ et $\overline{DK}$ représentatifs des données série reçues et sur sa sortie 13 un signal d'horloge CLK.

Les signaux $\overline{DJ}$, $\overline{DK}$ et CLK ainsi que le signal de trame F reçu du circuit d'attaque 6 au moyen de la liaison 11, par le circuit 12 sont appliqués à un circuit 17 de conversion et de démultiplexage qui reconstitue en parallèle sur ses sorties 18-0 à 18-7 les bits de données D0 à D7 transmis pendant la trame, bits qui seront utilisés par les circuits de la microplaquette réceptrice.

On va maintenant décrire en référence à la figure 2, le procédé utilisé pour coder les bits de données série sur la sortie 5 et pour engendrer les signaux $\overline{DJ}$, $\overline{DK}$ et CLK sur les sorties 14, 15 et 16.

Les trains d'impulsions PH1 et PH2 sont engendrés à partir des bits de données série D et de leur complèment $\overline{D}$ et du signal d'horloge CK'. Le signal CK' est synchronisé avec le signal CK qui a un niveau haut au milieu des flancs montants et descendants du signal CK' et a dont une période égale à deux fois la période du signal d'horloge CK. Dans un mode de réalisation on suppose qu'un bit 1 est représenté par un niveau haut et une bit 0 par un niveau bas.

Lorsque le niveau du signal d'horloge CK' est inférieur au niveau du train de bits de données D, PH1 est à un premier niveau par exemple haut. Dans le cas contraire où le niveau du signal d'horloge CK' est supérieur au niveau du train de bits de données D, PH1 est à un second niveau par exemple bas.

Lorsque le niveau du signal d'horloge CK' est inférieur au niveau du complément $\overline{D}$ du train de bits de données, PH2 est au premier niveau, par exemple haut et dans le cas contraire où le niveau du signal d'horloge est supérieur au complément D du train de bits de données, PH2 est au second niveau, par exemple bas.

Ainsi, deux trains d'impulsions PH1 et PH2, sont engendrés, qui sont tels que PH1 et PH2 sont au même niveau haut ou bas sauf pendant les transitions du signal d'horloge, le décalage de phase de ces deux signaux pendant les transitions d'horloge étant représentatif des données transmises et étant codé de la façon suivante.

Avec les conventions adoptées, lorsque pendant une transition montante du signal d'horloge CK' le front descendant de PH1 se produit avant le front descendant de PH2, le bit de données correspondant est un "0". Dans le cas contraire c'est-à-dire lorsque le front descendant de PH1 se produit après le front descendant de PH2, le bit de données correspondant est 1.

Lorsque pendant une transition descendante du signal d'horloge CK', le front montant de PH1 se produit avant le front montant de PH2, le bit de données correspondant est un "1". Dans le cas contraire, lorsque le font montant de PH1 se produit après le front montant de PH2, le bit de données correspondant est "0".

Pour détecter ce décalage de phase et retrouver les bits de données, une comparaison est faite entre les niveaux de PH1 et PH2. En effet, PH1 et PH2 sont au même niveau: haut ou bas, sauf pendant les transitions du signal d'horloge. Pendant ces transitions, lorsque PH1 est inférieur à PH2, un "0" est détecté et lorsque PH1 est supérieur à PH2 un "1" est détecté.

A la réception, par comparaison entre les niveau des signaux PH1 et PH2 reçus, un signal d'horloge CLK est engendré, ce signal ayant le second niveau par exemple bas lorsque les niveaux de PH1 et PH2 sont égaux et ayant le premier niveau par exemple haut dans le cas contraire.

Deux signaux $\overline{DJ}$ et $\overline{DK}$ représentatifs des bits de données sont créés; à partir de PH1 et PH2 pour permettre la remise en parallèle des bits de données reçus en série.

Lorsque PH1 et PH2 sont égaux, c'est-à-dire en dehors des transitions d'horloge CK', $\overline{DJ}$ et $\overline{DK}$ sont au premier niveau arbitrairement choisi haut.

Lorsque PH1 et PH2 différent, deux cas peuvent se présenter. Si PH1>PH2 seul $\overline{DJ}$ passe à son second niveau, qui a été choisi bas. Si PH1<PH2, seul le signal $\overline{DK}$ passe au niveau bas. Les signaux $\overline{DJ}$ et $\overline{DK}$ qui indiquent la présence des données binaires à "1" pour $\overline{DJ}$ et à "0" pour $\overline{DK}$ sont ensuite utilisés sur les entrées $\overline{J}$ et $\overline{K}$ de bascules type JK d'un registre pour la transformation série/parallèle.

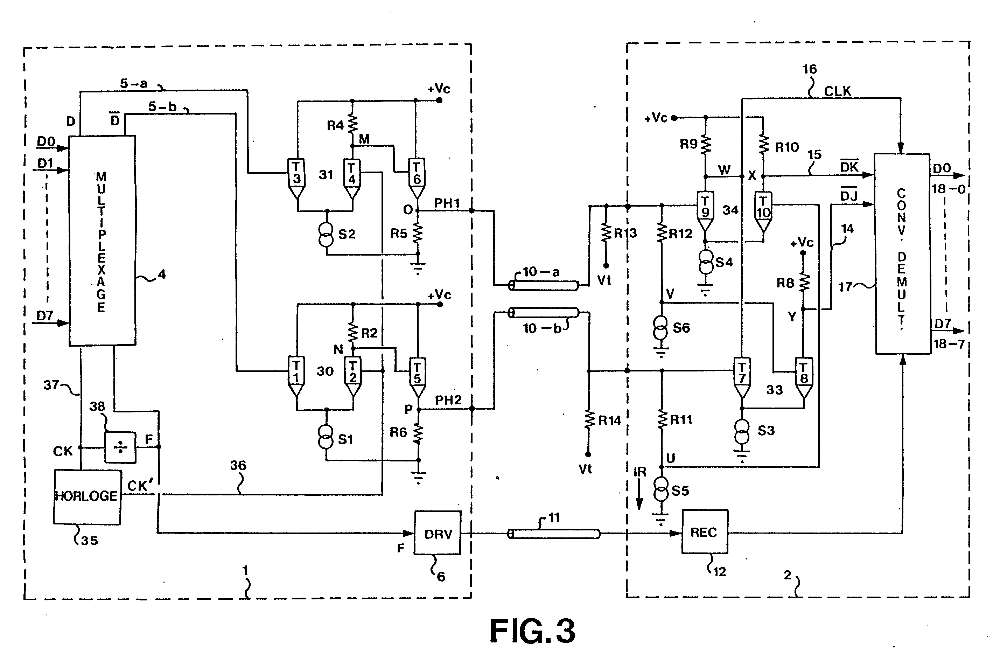

On va maintenant décrire en référence à la figure 3, les circuits permettant de mettre en oeuvre ce procédé.

Sur la microplaquette 1, deux comparateurs 30 et 31 engendrznt PH1 et PH2 à partir du train de bits de données série D et de son complément $\overline{D}$ fournis par le circuit de multiplexage 4 représenté sur la figure 4.

Sur la microplaquette 2, les signaux $\overline{DJ}$, $\overline{DK}$ et CLK sont fournis par deux comparateurs 33 et 34 et sont appliqués à un circuit de conversion et de démultiplexage 17 représenté sur la figure 5.

Sur la microplaquette 1, une horloge 35 fournit sur sa sortie 36 le signal CK' et sur sa sortie 37 le signal CK. Ce signal CK est divisé par 8 par le diviseur de fréquence 38 pour former le signal de trame F. Les signaux CK et F sont appliqués au circuit de multiplexage 4 pour effectuer la conversion parallèle série des bits D0 à D7.

Chacun des comparateurs qui engendrent les signaux PH1 et PH2 est constitué de deux transistors NPN dans un mode de réalisation préfére, à émetteurs couplés: T1 et T2 dans le comparateur 30, T3 et T4 dans le comparateur 31.

La base du transistor T3 reçoit les bits de données D et la base du transistor T1 reçoit le complément des bits de données $\overline{D}$. Les bases des transistors T2 et T4 reçoivent le signal d'horloge CK' de la ligne 36. Les émetteurs de T1 et T2 sont connectés à la masse par une source de courant S1 et les émetteurs de T3 et T4 sont connectés à la masse par une source de courant S2. Les collecteurs de T1 et T3 sont connectés à une tension d'alimentation positive +Vc et les collecteurs de T2 et T4 sont connectés à la tension +Vc par des résistances R2 et R4 respectivement.

Lorsque les bits de données D sur la base de T3 ont un niveau supérieur au signal d'horloge CK' sur la base de T4, T3 est conducteur et T4 est bloqué en conséquence, le niveau au collecteur du transistor T4 (point M) est haut. Dans le cas contraire: bit de données D inférieur au signal d'horloge CK', T4 est conducteur et T3 est bloqué, le niveau au point M est bas.

Lorsque le niveau du complément $\overline{D}$ des bits de données sur la base de T1 est supérieur au signal d'horloge CK' sur la base de T2, T1 est conducteur et T2 est bloqué. Donc le niveau de la tension au collecteur de T2 (point N) est haut. Inversement, lorsque le niveau du complément $\overline{D}$ des bits de données est inférieur au signal d'horloge CK', T1 est bloqué et T2 est conducteur. Donc le niveau au point N est bas.

Les points N et M sont connectés aux bases de deux transistors T5 et T6, qui constituent les circuits d'attaque 9 et 8 de la figure 1. Les collecteurs de ces transistors T5 et T6 sont connectés à la tension d'alimentation positive et leurs émetteurs sont connectés à la masse par des résistances R5 et R6. Les signaux aux points M et N se retrouvent donc aux points O et P avec la même différence de niveaux, et constituent les signaux PH1 et PH2 qui sont transmis par les lignes 10-a et 10-b à la microplaquette réceptrice 2.

Sur cette microplaquette 2, la détection des trois états: PH1>PH2, PH1<PH2 et PH1=PH2 est réalisée par deux comparateurs 33 et 34.

Le comparateur 33 comporte deux transistors T7 et T8 à émetteurs couplés et connectés à la masse par une source de courant S3.

La base de T7 est connectée à la ligne 10-b et à une première borne d'une résistance R11 dont l'autre borne U est connectée à la masse par une source de courant IR, S5.

Le collecteur de T8, est connecté à la tension d'alimentation πVc par la résistance R8.

Le comparateur 34 comporte deux transistors T9 et T10 à émetteurs couplés et connectés à la masse par une source de courant S4.

La base de T9 est connectée à la ligne 10-a et à une premiére borne d'une résistance R12 de même valeur que R11 dont l'autre borne V est connectée à la masse par une source de courant IR, S6. Le collecteur de T10 est connecté par la résistance R10 à la tension d'alimentation +Vc et le collecteur de T9 est connecté au collecteur du transistor T7, au point W et à la tension d'alimentation par une résistance R9.

La base de T8 est connectée au point V, et la base de T10 est connectée au point U.

Les signaux $\overline{DK}$ et $\overline{DJ}$ sont obtenus aux collecteurs de T10 et de T8 respectivement, en X et Y et le signal CLK est obtenu en W aux collecteurs de T7 et T9.

Les résistances R13 et R14 dont une borne est connectée aux lignes 10-a et 10-b respectivement à l'entrée de la microplaquette 2, et une autre borne est connectée à une tension d'alimentation VT servent à réaliser l'adaptation des lignes, le courant dans les résistances est limité pour que T5 et T6 ne conduisent pas trop.

Le fonctionnement du circuit est le suivant:

Lorsque PH1 est supérieur à PH2, le potentiel sur la base de T9 est supérieur à celui sur la base de T10. En effet, le potentiel au point U est égal à PH2 moins R11 IR qui correspond à l'immunité au bruit du circuit. Donc T9 conduit et T10 est bloqué, le potentiel au point X est haut.

Dans le comparateur 33 si PH1 est supérieur à PH2 plus la chute de tension dans R12, T7 est bloqué et T8 est conducteur, le potentiel au point Y est au niveau bas.

T9 étant conducteur et T7 bloqué le potentiel au point W est haut.

Inversement, lorsue PH1 est inférieur à PH2, le potentiel sur la base de T7 est supérieur à celui sur la base de T8. En effet, le potentiel au point est V égal à PH1 moins R12 IR qui correspond à l'immunité au bruit du circuit. Donc T7 conduit et T8 est bloqué et le potentiel au point Y est au niveau haut.

Dans le comparateur 34, T9 est bloqué et T10 est conducteur donc le potentiel au point X est bas.

T7 étant conducteur et T9 bloqué, le potentiel au point W est haut.

Lorsque PH1=PH2 ou lorsque la différence entre ces deux signaux est inférieure à la chute de tension aux bornes de R11 ou R12, les transistors T9 et T7 conduisent et T8 et T10 sont bloqués donc les potentiels aux points X et Y sont hauts et le potentiel au point W est bas.

En conséquence, les signaux obtenus aux poins Y, X et W sont les signaux $\overline{DJ}$, $\overline{DK}$ et CLK de la figure 2 et sont utilisés dans le circuit 17 de conversion de démultiplexage pour former sous contrôle du signal de trame F reçu par le récepteur 12, les bits de données parallèles D0 à D7 qui seront utilisés par les circuits non représentés, de la microplaquette réceptrice 2.

On va décrire en référence à la figure 4, un circuit 4 permettant de réaliser le multiplexage des bits de données parallèles D0 à D7.

Ce circuit est constitué par huit étages SRL0 à SRL7 de bascules de registre à décalage ayant deux entrées de données et deux entrées de contrôle pouvant recevoir deux signaux d'horloge. Ces bascules peuvent être du type décrit dans l'article paru dans la revue "Electronics" le 15 mars 1979 à la page 108, sour le tire: "Level Sensitive Scan Designal Tests Chips, Boards, Systems".

Les références utilisées sur cette figure pour désigner les différentes entrées et sorties de chacune des bascules sont celles de l'article à savoir:

D: données système (system data)
C: horloge système (system clock)
I: données balayage (scan data)
A: horloge A décalage (Shift A clock)
+L2: sortie vraie
−L2: sortie complémentaire

Les bascules SRL7 à SRL0 sont disposées pour constituer un registre à décalage. La sortie +L2 de la bascule SRL7 étant connectée à l'entrée I de la bascule SRL6, etc.

Le signal d'horloge CK est appliqué à toutes les entrées A des bascules et le signal de trame F est appliqué à toutes les entrées C.

Les bits de données sont appliqués aux entrées D, D7 étant appliqué à l'entrée D de la bascule SRL7 et D0 étant appliqué à l'entrée D de la bascule SRL0.

A la première impulsion de trame F1, les bits de données sont chargés en parallèle dans les bascules SRL7 à SRL0, et ensuite à chaque impulsion d'horloge CK, ils sont décalés dans la chaîne de bascules. Si bein qu'à la première impulsion d'horloge CK0, les sortie +L2 et −L2 de la bascule SRL0 fournissent sur les lignes 5-a et 5-b le bit D0 et son complément $\overline{D0}$, et l'état de la bascule SRL1 sera transféré à la bascule SRL0. Ainsi successivement, à chacune des impulsions suivantes CK1 à CK7, un bit et son complément D1, $\overline{D1}$ à D7, $\overline{D7}$ apparaîtront sur les sorties 5-a et 5-b.

A l'impulsion de trame suivante F2, un autre octet pourra être chargé dans le registre, pou y subir une conversion parallèle/série.

Sur la figure 5, est représenté un circuit 17 qui permet de retrouver les bits de données D0 à D7 à partir des signaux $\overline{DJ}$, $\overline{DK}$ et CLK.

Ce circuit est constitué de huit bascules type $\overline{J}$—$\overline{K}$: $\overline{JK}0$ à $\overline{JK}7$ montées en série dans lesquelles, l'état d'une bascule est transféré à la bascule suivante sous contrôle du signal d'horloge CLK obtenu au point G du circuit de la figure 3.

Dans ce type de bascule on dispose de deux entrées $\overline{J}$ et $\overline{K}$ et de deux sorties Q et $\overline{Q}$. L'entrée $\overline{J}$

est destinée à la mise à zéro de la bascule, et l'entrée $\overline{K}$ à la mise à un et l'état Qt+1 de la bascule à un temps t+1 dépend de son état au temps précédent Qt conformément à la table de vérité suivante:

| Qt | $\overline{J}$ | $\overline{K}$ | Qt+1 |
|----|----|----|------|
| 0 | 1 | 1 | 0 |
| 0 | 1 | 0 | 0 |
| 0 | 0 | 1 | 1 |
| 0 | 0 | 0 | 1 |
| 1 | 1 | 1 | 1 |
| 1 | 1 | 0 | 0 |
| 1 | 0 | 1 | 1 |
| 1 | 0 | 0 | 0 |

Les signaux $\overline{DJ}$ et $\overline{DK}$ sont appliqués aux entrées $\overline{J}$ et $\overline{K}$ de la bascule $\overline{JK}7$. Les sorties $\overline{Q}$ et Q de la bascule $\overline{JK}7$ sont connectées aux entrées $\overline{J}$ et $\overline{K}$ de la bascule suivante $\overline{JK}6$ et ainsi de suite jusqu'à la bascule $\overline{JK}0$.

Au rythme du signal d'horloge CLK, l'état des bascules successives $\overline{JK}7$ à $\overline{JK}0$ se propage dans la chaîne.

Toutes les bascules de la chaîne sont remises à zéro (état Q=0, $\overline{A}$=1) par les impulsions de trame.

En conséquence, la première impulsion de trame reçue F1 met à 0 toutes les bascules.

Pendant l'impulsion d'horloge CLK0 (figure 2) $\overline{DJ}$=0 et $\overline{DK}$=1, dont Q7 passe à 1.

Au temps d'horloge CLK1, Q7 étant à 1 et $\overline{Q7}$ à 0, la bascule $\overline{JK}6$ passe à 1. $\overline{DJ}$ est à 1 et $\overline{DK}$ à 0, la bascule $\overline{JK}7$ passe à l'état 0 $(\overline{Q7}=1, Q7=0)$.

Au temps d'horloge CLK2, Q6=1 et $\overline{Q6}$=0, $\overline{Q7}$=1 et Q7=0, la bascule $\overline{JK}5$ passe à 1, la bascule $\overline{JK}6$ passe à l'état 0. $\overline{DJ}$ est égal à 1 et $\overline{DK}$ égal à 0, la bascule $\overline{JK}7$ qui était précédemment à l'état 0 reste à l'état 0.

Ainsi, à chacune des impulsions d'horloge CLK, l'état de chaque bascule est propagé dans la chaîne de bascules $\overline{JK}7$ à $\overline{JK}0$ et au bout des huit impulsions CLK0 à CLK7 les sorties Q7 à Q0 des différentes bascules sont aux niveaux représentatifs des bits de données 10011000 dans l'exemple choisi représenté sur la figure 2.

L'état des bascules est alors transféré dans un registre de sortie 50 par une porte ouverte par un signal FS représenté sur la figure 2, qui est le signal de trame F avancé d'une demi-période de l'horloge CK.

Un des avantages déjà mentionné de la présente invention est qu'elle permet de réduire le nombre des broches d'entrée/sortie des modules sur lesquels sont montées les microplaquettes émettrice et réceptrice. Du fait que les transmissions en série des bits de données nécessite la transmission d'un signal de trame supplémentaire, on peut utiliser ce même signal, transmis par le circuit 6 et reçu par le circuit 12 pour contrôler le multiplexage et le démultiplexage de plusieurs octets de données à transmettre de 1 à 2.

En plus de cet avantage, le procédé et le système de la présente invention permettent la transmission de données avec de faibles excursions de signaux, du fait qu'un mode de transmission différentielle est utilisé. En effet, seule la différence des niveaux entre PH1 et PH2 est importante. Pour cette raison la transmission peut être réalisée avec de faibles excursions de tension sur deux lignes couplées qui peuvent être des lignes de circuits imprimés avec un espacement minimal. Du fait de ce couplage, le système peut tolérer un rapport bruit/signal supérieur à celui des systèmes traditionnels.

Il est aussi possible d'adapter la résistance à l'extrémité des lignes (R13, R14 sur la figure 3) avec l'impédance des lignes, ce qui donne un meilleur compromis entre les caractéristiques de puissance et de performance.

Les deux moyens de transmission 10-a et 10-b pourraient aussi être constitués par des fibres optiques. Dans ce cas, il faudrait prévoir sur les microplaquettes 1 et 2 les adaptateurs nécessaires pour attaquer ces fibres optiques.

Un autre avantage du système est qu'il simplifie la détection des erreurs de partié à la réception. Pour cela il suffit d'ajouter dans le circuit de la figure 5, une bascule 52 dont l'état est contrôlé par la sortie Q7. Cette bascule est restaurée par le signal de trame et change d'état à chaque transition montante du signal à la sortie Q7. En conséquence, à la fin de la transmission d'un octet cette bascule sera toujours dans un état déterminé si la transmission n'a pas introduit d'erreur de parité, état qui dépend de la convention utilisée: nombre de 1 pair ou nombre 1 impair. L'état de la bascule 52 est testé à la fin de la transmission d'un octet. Pour cela le signal FS et le signal de sortie de la bascule 52 sont appliqués à une porte ET 53 dont la sortie 54 est testée.

L'état du signal de sortie de la porte ET 53 indiquera qu'il y a eu ou qu'il n'y a pas eu d'erreurs de parité dans la transmission.

**Revendications**

1. Procédé de transmission de bits d'information engendrés par des premiers circuits sur une première microplaquette (1) a des seconds circuits sur une seconde microplaquette (2), dans lequel les bits à transmettre appartiennent à une train de bits série (D), un bit par période d'horloge, caractérisé en ce qu'il comprend:

la génération d'un signal en dents de scie (CK') ayant une amplitude supérieure à l'amplitude des bits à transmettre et une période égale à deux périodes d'horloge,

la génération à partir du train de bits (D) et de son complément ($\overline{D}$) d'un premier et d'un second signal (PH1 et PH2), ledit premier signal étant à un premier niveau lorsque le niveau du train de bits est supérieur au niveau du signal d'horloge en dents de scie et étant à un second niveau lorsque le niveau du train de bits est intérieur au niveau du signal d'horloge en dents de scie, et le second signal étant au premier niveau lorsque le niveau du complément du train de bits est supérieur au signal d'horloge en dents de scie et étant au second niveau lorsque le niveau du complément du train de bits est inférieur au niveau du signal d'horloge en dents de scie,

la transmission des premier et second signaux à la microplaquette réceptrice, et

la génération dans ladite microplaquette réceptrice à partir des premier et second signaux reçus, d'un premier et d'un second signal représentatifs ($\overline{DJ}$ et $\overline{DK}$) de l'état des bits et d'un signal d'horloge reconstitué (CLK) définissant chaque période de bit,

ledit premier signal ($\overline{DJ}$) étant à un premier niveau lorsque les niveaux des premier et second signaux (PH1 et PH2) sont égaux ou que le niveau du premier signal est inférieur au niveau du second signal, et étant à un second niveau lorsque le niveau du premier signal est supérieur au niveau du second signal,

ledit second signal ($\overline{DK}$) étant à un premier niveau lorsque les niveaux des premier et second signaux (PH1 et PH2) sont égaux ou que le niveau du premier signal est supérieur au niveau du second, et étant à un second niveau lorsque le niveau du premier signal est inférieur au niveau du second signal,

ledit signal d'horloge reconstitué (CLK) étant au premier niveau lorsque les niveaux des premier et second signaux (PH1 et PH2) diffèrent, et au second niveau lorsque les niveaux desdits premier et second signaux sont égaux.

2. Procédé selon la revendication 1 dans lequel le train de bits en série est obtenu par multiplexage de multiplets de bits en parallèle, caractérisé en ce qu'il comprend:

la génération sur la première microplaquette d'un signal de trame (F) pour contrôler le multiplexage des bits en parallèle,

la transmission du signal de trame à la seconde microplaquette,

la conversion et la transformation des deux signaux représentatifs des bits sous contrôle du signal de trame reçu par la seconde microplaquette et du signal d'horloge reconstitué (CLK) en multiplets de bits parallèles.

3. Dispositif pour mettre en oeuvre la procédé selon la revendication 1 ou 2 caractérisé en ce qu'il comprend:

des moyens (35, 36) pour fournir un signal en dents de scie (CK') ayant une amplitude supérieure à l'amplitude des bits à transmettre et une période égale á deux période d'horloge,

un premier moyen de comparaison (31) recevant en entrées le train de bits (D) et le signal d'horloge en dents de scie (CK') et fournissant en sortie le premier signal (PH1),

un second moyen de comparaison (30) recevant en entrées le complément ($\overline{D}$) du train de bits et le signal d'horloge en dents de scie (CK') et fournissant en sortie le second signal (PH2),

des moyens (10-a et 10-b) pour transmettre les premier et second signaux à la seconde microplaquette,

un troisième moyen de comparaison (33) placé sur la second microplaquette recevant en entrées une fraction du premier signal (PH1) et le second signal (PH2) pour fournir en sortie (14) le premier signal représentatif de l'état des données ($\overline{DJ}$),

un quatrième moyen de comparaison (34) placé sur la second microplaquette recevant en entrées, une fraction du second signal (PH2) et le premier signal pour fournir en sortie (15) le second signal représentatif de l'état des données ($\overline{DK}$),

un cinquième moyen de comparaison (T9, T7, R9) recevant les premier et second signaux (PH1 et PH2) et fournissant en sortie (16) le signal d'horloge reconstitué (CLK).

4. Dispositif selon la revendication 3 caractérisé en ce que les premier et second moyens de comparaison comprennent chacun:

un premier transistor (T1 ou T3) dont la base constitue une des entrées dudit moyen de comparaison,

un second transistor (T2 ou T4) dont la base constitue l'autre entrée dudit moyen de comparaison, les deux transistors ayant leurs émetteurs couplés à une première tension de référence (la masse) par une source de courant ($S_1$ ou $S_2$) et leurs collecteurs connectés à une seconde tension de référence (Vc) par des résistances (R2 ou R4), la sortie dudit moyen de comparaison étant prise au collecteur du second transistor.

5. Dispositif selon la revendication 4, caractérisé en ce que les premier et second moyens de comparaison comprennent un circuit d'attaque de ligne, constitué d'un troisième transistor (T5 ou T6) dont la base est connectée au collecteur du second transistor, le collecteur est connecté à la seconde tension de référence et l'émetteur est connecté à la première tension de référence par une résistance (R5 ou R6), la sortie desdits moyens de comparaison étant prise aux émetteurs desdits troisièmes transistors (T5 ou T6).

6. Dispositif selon la revendication 5 caractérisé en ce que:

le troisième moyen de comparaison (33) comprend:

un premier transistor (T7) dont la base reçoit le second signal (PH2) des moyens de transmission et dont l'émetteur est connecté à la première tension de référence par une première source de courant (S3) et le collecteur est connecté à la seconde tension de référence par une première résistance (R9),

un second transistor (T8) dont la base reçoit une fraction du premier signal (PH1) générée par une seconde résistance (R12) ayant une borne sur laquelle est appliqué le premier signal (PH1) et une autre borne connectée à la première tension de référence par une seconde source de courant (S6) dont l'émetteur est connecté à l'émetteur du premier transistor et le collecteur est connecté à la seconde tension de référence par une troisième résistance (R8), le premier signal indicatif de l'état des données ($\overline{DJ}$) étant obtenu au collecteur (Y) du second transistor T8), et

le quatrième moyen de comparaison (34), comprend:

un premier transistor (T9) dont la base reçoit le premier signal (PH1) des moyens de transmission et dont l'émetteur est connecté à la première tension de référence par une première source de courant (S4) et le collecteur est connecté à la seconde tension de référence par la première résistance du premier moyen de comparaison,

un second transistor (T10) dont la base reçoit une fraction du second signal (PH2) généré par une première résistance (R11), ayant une borne sur laquelle est appliqué le second signal (PH2) et une autre borne connectée à la première tension de référence par une seconde source de courant (S5), dont l'émetteur est connecté à l'émetteur du premier transistor (T9) et le collecteur est connecté à la seconde tension de référence par une seconde résistance (R10), le second signal représentatif de l'état des données $(\overline{DK})$ étant obtenu au collecteur (X) du second transistor (T10), et

le cinquième moyen de comparaison comprennent:

les premiers transistors (T7 et T9) des troisième et quatrième moyens de comparaison, le signal d'horloge reconstitué étant obtenu au point commun (W) des collecteurs desdits transistors.

7. Dispositif selon l'une quelconque des revendications 3 à 6 caractérisé en ce qu'il comprend un circuit de conversion et de démultiplexage (17) qui comprend une chaîne de bascules types $/\overline{JK}/$ $(\overline{JK7}$ à $\overline{JK0})$, ayant chacune une entrée $/\overline{J}/$, une entrée $/\overline{K}/$ et une entrée d'horloge /C/ et une sortie vraie /Q/ et une sortie complémentaire $/\overline{Q}/$, la chaîne étant constituée en connectant les sorties $/\overline{Q}/$ et /Q/ d'une bascule aux entrées $/\overline{J}/$ et $/\overline{K}/$ de la bascule suivante et en appliquant aux entrées $/\overline{J}/$ et $/\overline{K}/$ de la première bascule des signaux représentatifs de l'état des données $(\overline{DJ}$ et $\overline{DK})$ et à l'entrée d'horloge le signal d'horloge reconstitué (CLK), les bits de données reçus par la seconde microplaquette et leurs compléments étant générés sur les sorties /Q/ et $\overline{Q}/$ des bascules, pour être utilisés par les seconds circuits de la seconde microplaquette.

**Patentansprüche**

1. Übertragungsverfahren für Informationsbits, die durch erste Schaltkreise auf einem ersten integrierten Baustein (1) erzeugt werden, an zweite, auf einem zweiten integrierten Baustein (2) befindliche Schaltkreise, wobei die zu übertragenden Bits einer seriellen Bitfolge (D) mit einem Bit pro Taktabstand angehören und das Verfahren wie folgt gekennzeichnet ist:

Erzeugung eins Sägezahnsignals (CK') mit einem Amplitude, die grösser als die der zu übertragenden Bits ist, und einer Period, die gleich zwei Taktabständen ist,

von der Bitfolge (D) und deren Komplement $(\overline{D})$ ausgehend, Erzeugung eines ersten und und eines zweiten Signals (PG1 und PH2), wobei das genannte erste Signal einer ersten Ebene entspricht, wenn die Ebene der Bitfolge höher als die Ebene des Sägezahn-Taktgebersignals ist, und einer zweiten Ebene, wenn die Ebene der Bitfolge unter der Ebene des Sägezahn-Taktgebersignals liegt, und das zweite Signal der ersten Ebene entspricht, wenn die Ebene des Komplements der Bitfolge höher als die Ebene des Sägezahn-Taktgebersignals ist, und einer zweiten Ebene, wenn die Ebene des Komplements der Bitfolge unter der Ebene des Sägezahn-Taktgebersignals liegt,

Übertragung der ersten und zweiten Signale zum integrierten Empfangs-Baustein, und,

auf dem genannten Empfangs-Baustein, auf der Basis der empfangenen ersten und zweiten Signale, Erzeugung eines ersten und eines zweiten, den Zustand der Bits darstellenden Signals $(\overline{DJ}$ und $\overline{DK})$, und eines rekonstruierten Taktgebersignals (CLK), das jede Bitperiode definiert,

wobei das genannte erste Signal $(\overline{DJ})$ einer ersten Ebene entspricht, wenn die Ebenen der ersten und zweiten Signale (PH1 und PH2) gleich sind oder wenn die Ebene des ersten Signals niedriger als die des zweiten Signals ist, und einer zweiten Ebene, wenn die Ebene des ersten Signals höher als die des zweiten Signals liegt,

und das genannte zweite Signal $(\overline{DK})$ einer ersten Ebene entspricht, wenn die Ebenen der ersten und zweiten Signale (PH1 und PH2) gleich sind oder wenn die Ebene des ersten Signals höher als die des zweiten Signals ist, und einer zweiten Ebene, wenn die Ebene des ersten Signals unter der des zweiten Signals liegt,

und das genannte rekonstruierte Taktgeber-signal (CLK) der ersten Ebene entspricht, wenn die Ebenen der ersten und zweiten Signale (PH1 und PH2) unterschiedlich sind; und der zweiten Ebene, wenn die Ebenen der genannten ersten und zweiten Signale gleich sind.

2. Verfahren nach Anspruch 1, bei dem die serielle Bitfolge durch Mehrfachausnutzung von bitparallelen Bytes erhalten wird, dadurch gekennzeichnet, dass es weiter folgende Merkmale aufweist:

auf dem ersten integrierten Baustein, Erzeugung eines Rastersignals (F) zur Kontrolle der Mehrfachausnutzung der parallelen Bits,

Übertragung des Rastersignals zum zweiten integrierten Baustein,

Umsetzung und Umformung der beiden die Bits darstellenden Signale in bitparallele Bytes unter Kontrolle des vom zweiten integrierten Baustein empfangenen Rastersignals und des rekonstruierten Taktgebersignals (CLK).

3. Vorrichtung zur Inbetriebnahme des Verfahrens nach Anspruch 1 oder 2, dadurch gekennzeichnet, dass sie aufweist:

Mittel (35, 36) zur Erstellung eines Sägezahnsignals (CK'), dessen Amplitude grösser als die der zu übertragenden Bits its während die Periode zwei Taktabständen entspricht,

ein erstes Vergleichsmittel (31), das als Eingabe dit Bitfolge (D) und das Sägezahn-Taktgebersignal (CK') empfängt und am Ausgang das erste Signal (PH1) erstellt,

ein zweites Vergleichsmittel (30), das als Eingabe das Komplement zur Bitfolge $(\overline{D})$ und das Sägezahn-Taktgebersignal (CK') empfängt und am Ausgang das zweite Signal (PH2) erstellt,

Mittel (10-a und 10-b), um die ersten und zweiten Signale dem zweiten integrierten Baustein zu übertragen,

ein drittes, auf dem zweiten integrierten Baustein angeordnetes Vergleichsmittel (33), das als Eingabe einen Teil des ersten Signals (PH1) und das zweite Signal (PH2) erhält, um als Ausgang (14) das erste, den Datenstatus darstellende Signal $(\overline{DJ})$ zu erstellen,

ein viertes, auf dem zweiten integrierten Baustein angeordnetes Vergleichsmittel (34), das als Eingabe einen Teil des zweiten Signals (PH2) und das erste Signal (PH1) erhält, um als Ausgang (15) das zweite, den Datenstatus darstellende Signal $(\overline{DK})$ zu erstellen,

ein fünftes Vergleichsmittel (T9, T7, R9), das die ersten und zweiten Signale (PH1 und PH2) empfängt und also Ausgabe (16) das rekonstruierte Taktgebersignal (CLK) erstellt.

4. Vorrichtung nach Anspruch 3, dadurch gekennzeichnet, dass das erste und das zweite Vergleichsmittel jeweils umfassen:

einen ersten Transistor (T1 oder T3), dessen Bassis einen der Eingänge eines der genannten Vergleichsmittel bildet,

einen zweiten Transistor (T2 oder T4), dessen Basis den anderen Eingang des genannten Vergleichsmittels bildet, wobei die Emitter dieser beiden Transistoren über eine Stromquelle (S1 oder S2) mit einer ersten Bezugsspannung (die Masse) und ihre Kollektoren über Widerstände (R2 oder R4) mit einer zweiten Bezugsspannung (Vc) verbunden sind während der Kollektor des zweiten Transistors al Ausgang dient.

5. Vorrichtung nach Anspruch 4, dadurch gekennzeichnet, dass das erste und das zweite Vergleichsmittel einen Linien-Treiberkreis aufweisen, der aus einem dritten Transistor (T5 oder T6) besteht, dessen Basis mit dem Kollektor des zweiten Transistors verbunden ist während sein Kollektor und sein Emitter über einen Widerstand (R5 oder R6) jeweils mit der zweiten bzw. mit der ersten Bezugsspannung verbunden sind, wobei die Emitter der genannten dritten Transistoren (T5 oder T6) den genannten Vergleichsmitteln als Ausgang dienen.

6. Vorrichtung nach Anspruch 5, dadurch gekennzeichnet, dass:

das dritte Vergleichsmittel (33) folgendes umfasst:

— einen ersten Transistor (T7), dessen Basis das zweite Signal (PH2) der Übertragungsmittel empfängt während sein Emitter über eine erste Stromquelle (S3) mit der ersten Bezugsspannung und sein Kollektor über einen ersten Widerstand (R9) mit der zweiten Bezugsspannung verbunden ist,

— einen zweiten Transistor (T8), dessen Basis einen von einem zweiten Widerstand (R12) erzeugten Teil des ersten Signals (PH1) empfängt, wozu das erste Signal (PH1) an einen Anschluss dieses Widerstandes gelegt wird und ein anderer Anschluss davon über eine zweite Stromquelle (S6) mit der ersten Bezugsspannung verbunden ist, dessen Emitter mit dem Emitter des ersten Transistors verbunden ist und dessen Kollektor über einen dritten Widerstand (R8) die zweite Bezugsspannung erhält, wobei das erste, den Status der Daten anzeigende Signal $(\overline{DJ})$ am Kollektor (Y) des zweiten Transistors (T8) ansteht, und

das vierte Vergleichsmittel (34) folgendes umfasst:

— einen ersten Transistor (T9), dessen Basis das erste Signal (PH1) der Übertragungsmittel empfängt während sein Emitter über eine erste Stromquelle (S4) mit der ersten Bezugsspannung und sein Kollektor über den ersten Widerstand des ersten Vergleichsmittels mit der zweiten Bezugsspannung verbunden ist,

— einen zweiten Transistor (T10), dessen Basis einen von einem ersten Widerstand (R11) erzeugten Teil des zweiten Signals (PH2) empfängt, wozu das zweite Signal (PH2) an einen Anschluss dieses Widerstandes gelegt wird und ein anderer Anschluss davon über eine zweite Stromquelle (S5) mit der ersten Bezugsspannung verbunden ist, dessen Emitter mit dem Emitter des ersten Transistors (T9) verbunden ist und desen Kollektor über einen zweiten Widerstand (R10) die zweite Bezugsspannung erhält, wobei das zweite, den Status der Daten anzeigende Signal $(\overline{DK})$ am Kollektor (X) des zweiten Transistors (T10) ansteht, und

das fünfte Vergleichsmittel folgendes umfasst:

— die ersten Transistoren (T7 und T9) des dritten und des vierten Vergleichsmittels, wobei das rekonstruierte Signal vom gemeinsamen Punkt (W) der Kollektoren der genannten Transistoren erhalten wird.

7. Vorrichtung nach jedem der Ansprüche 3 bis 6, dadurch gekennzeichnet, dass sie einem Umsetzungs- und Demultiplexierungs-Schaltkreis (17) aufweist, der eine Folge von Kippgliedern des Typs /JK/, (JK7 bis JK0) enthält, die jeweils einen Eingang /J/, einen Eingang /K/ und einen Takt- gebereingang /C/ sowie einen wahren Ausgang /Q/ und einen zusätzlichen Ausgang /Q̄/ aufweisen, wobei die Folge durch Zusammenschalten der Ausgänge /Q̄/ und /Q/ eines Kippgliedes mit den Eingängen /J/ und /K/ des nachfolgenden Kippgliedes und Anlegen der den Datenstatus darstellenden Signale $(\overline{DJ}$ und $\overline{DK})$ an den Eingängen /J/ und /K/ des ersten Kippgliedes sowie des rekonstruierten Taktgebersignals (CLK) am Eingang des Taktgebers gebildet wird, während die vom zweiten integrierten Baustein empfangenen Datenbits und ihre Komplemente an den Ausgängen /Q/ und /Q̄/ der Kippglieder generiert werden, um von den zweiten Schaltkreisen des zweiten integrierten Bausteins benutzt zu werden.

**Claims**

1. A process for transmitting information bits generated by first circuits on a first chip (1) to second circuits on a second chip (2), in which the bits to be transmitted belong to a serialized bit stream (D), one bit per clock period, characterized in that it includes the following steps:
   generating a saw-tooth signal (CK') having an amplitude higher than the amplitude of the bits to be transmitted and a period of two clock periods,
   generating a first and a second signal (PH1 and PH2) from bit stream (D) and its complement (D̄), said first signal being at a first level when the bit stream level is higher than the saw-tooth clock signal level and being at a second level when the bit stream level is lower than the saw-tooth clock signal level, and the second signal being at the first level when the bit stream complement level is higher than the saw-tooth clock signal and being at the second level when the bit stream complement level is lower than the saw-tooth clock signal level,
   transmitting the first and second signals to the receiving chip, and
   generating in said chip from the first and second received signals, a first and a second signal (D̄J̄ and D̄K̄) representative of the bit condition and a recovered clock signal (CLK) defining each bit period,
   said first signal (D̄J̄) being at a first level when the levels of the first and second signals (PH1 and PH2) are equal or when the level of the first signal is lower than the level of the second signal, and being at a second level when the level of the first signal is higher than the level of the second signal,
   said second signal (D̄K̄) being at a first level when the levels of the first and second signals (PH1 and PH2) are equal or when the level of the first signal is higher than the level of the second signal, and being at a second level when the level of the first signal is lower than the level of the second signal,
   recovered clock signal (CLK) being at the first level when the levels of the first and second signals (PH1 and PH2) are different, and at the second level when the levels of said first and second signals are equal.

2. A process as set forth in claim 1 in which the serial bit stream is obtained by multiplexing bytes of parallel bits, characterized in that it comprises the following steps:
   generating a frame signal (F) on the first chip for controlling multiplexing of parallel bits,
   transmitting the frame signal to the second chip,
   converting and transforming both bits representative signals as controlled by the frame signal received by the second chip and by recovered clock signal (CLK) into bytes of parallel bits.

3. A device for implementing the process of claims 1 or 2, characterized in that it includes:
   means (35, 36) for providing a saw-tooth clock signal (CK') having an amplitude higher than the amplitude of the bits to be transmitted and a period of two clock periods,
   a first comparing means (31) receiving bit stream (D) and saw-tooth clock signal (CK') as inputs and providing first signal (PH1) as an output,
   a second comparing means (30) receiving bit stream complement (D̄) and saw-tooth clock signal (CK') as inputs and providing second signal (PH2) as an output,
   means (10-a et 10-b) for transmitting the first and second signals to the second chip,
   a third comparing means (33) located on the second chip, receiving a fraction of first signal (PH1) and second signal (PH2) as inputs and providing first signal (D̄J̄) representative of the data condition as an output (14),
   a fourth comparing means (34) located on the second chip, receiving a fraction of second signal (PH2) and the first signal as inputs and providing second signal (D̄K̄) representative of the data condition as an output (15),
   a fifth comparing means (T9, T7, R9) receiving first and second signals (PH1 and PH2) and providing recovered clock signal (CLK) as an output (16).

4. A device according to claims 3 characterized in that each of said first and second comparing means includes:
   a first transistor (T1 or T3) the base of which is one of the inputs of said comparing means,
   a second transistor (T2 or T4) the base of which is the second input of said comparing means, both transistors having their emitters connected to a first reference voltage (ground) through a current source (S1 or S2) and their collectors connected to a second reference voltage (Vc) through resistors (R2 or R4), the output of said comparing means being taken from the collector of the second transistor.

5. A device according to claim 4, characterized in that the first and second comparing means include a line drive circuit comprised of a third transistor (T5 or T6) the base of which is connected to the collector of the second transistor, the collector of which is connected to the second reference voltage and the emitter is connected to the first reference voltage through a resistor (R5 or R6), the output of said comparing means being taken from the emitters of said third transistors (T5 or T6).

6. A device according to claim 5 characterised in that third comparing means (33) includes:
   a first transistor (T7) the base of which receives second signal (PH2) from the transmitting means and the emitter of which is connected to the first reference voltage through a first current source (S3) and the collector is connected to the second reference voltage through a first resistor (R9),

a second transistor (T8) the base of which receives a fraction of first signal (PH1) generated by a second resistor (R12) having a terminal receiving first signal (PH1) and a second terminal connected to the first reference voltage through a second current source (S6) the emitter of which is connected to the emitter of the first transistor and the collector of which is connected to the second reference voltage through a third resistor (R8), first signal (DJ) indicative of data condition (DJ) being obtained from collector (Y) of second transistor (T8), and

fourth comparing means (34) includes:

a first transistor (T9) the base of which receives first signal (PH1) from the transmission means and the emitter of which is connected to the first reference voltage through a first current source (S4) and the collector of which is connected to the second reference voltage through the first resistor of the first comparing means,

a second transistor (T10) the base of which receives a fraction of second signal (PH2) generated by a first resistor (R11), having a terminal receiving second signal (PH2) and another terminal connected to the first reference voltage through a second current source (S5), the emitter of which is connected to the emitter of first transistor (T9) and the collector of which is connected to second reference voltage through a second resistor (R10), second signal (DK) representative of data condition (DK) being obtained from collector (X) of second transistor (T10), and

the fifth comparing means includes:

first transistors (T7 and T9) of the third and fourth comparing means, the recovered clock signal being obtained from common point (V) of the collectors of said transistors.

7. A device according to anyone of claims 3 to 6, characterized in that it includes a converting and demultiplexing circuit (17) which comprises a set of latches (JK7 of JK0) of the (JK) type, each one having an input /J/, an input /K/ and a clock input /C/ and a true output /Q/ and a complementary output /Q̄/, the set being assembled by connecting outputs /Q̄/ and /Q/ of a latch to inputs /J/ and /K/ of the next latch and by applying signals (DJ and DK) representative of the data condition to inputs /J/ and /K/ of the first latch and recovered clock signal (CLK) to the clock input, the data bits received by the second chip and their complements being generated through latch outputs (Q and Q̄) to be used by the second circuits of the second chip.

**FIG.1**

0 112 951

**FIG. 2**

FIG.3

FIG. 4

FIG.5

0 112 951